# EUROPEAN PATENT APPLICATION

(11) **EP 4 507 081 A1**
(43) Date of publication of application: **12.02.2025**
(21) Application number: 24789707.7
(22) Date of filing: 17.06.2024
(51) Int. Cl.: H01M 50/15

(54) **COVER PLATE, COVER PLATE ASSEMBLY, BATTERY CASE, BATTERY MODULE, AND BATTERY PACK**

(30) Priority: 15.06.2023 CN 202321530873 U
(71) Applicant: Eve Power Co., Ltd., Jingmen, Hubei 448000 (CN)
(72) Inventor: WANG, Junmin, Jingmen, Hubei 448000 (CN); SHU, Kuanjin, Jingmen, Hubei 448000 (CN); HE, Xiaowu, Jingmen, Hubei 448000 (CN); HUANG, Jinhai, Jingmen, Hubei 448000 (CN); ZHENG, Xu, Jingmen, Hubei 448000 (CN); AN, Suli, Jingmen, Hubei 448000 (CN); WU, Xueyin, Jingmen, Hubei 448000 (CN); JIA, Yanli, Jingmen, Hubei 448000 (CN); LIN, Zhibing, Jingmen, Hubei 448000 (CN)
(74) Representative: Murgitroyd & Company
(86) International application number: PCT/CN2024/099636
(87) International publication number: WO 2024/255909

(57) **Abstract**

The disclosure provides a cover plate, a cover plate assembly, a battery housing, a battery module, and a battery pack. The cover plate includes a body portion and a first boss. The body portion has a thickness D1, and 0.8 mm ≤ D1 ≤ 1.5 mm. The first boss protrudes from one side of the body portion. The first boss is provided with a liquid injection hole communicating with a through hole. Another side of the body portion is provided with a first concavity corresponding to the first boss. The cover plate has a thickness D2 at the first boss, and 0.8 mm ≤ D2 ≤ 1.5 mm.

## Description

This application claims priority to and the benefit of Chinese Patent Application No. 202321530873.4, filed on June 15, 2023. The disclosure is hereby incorporated by reference in its entirety.

### TECHNICAL FIELD

The disclosure relates to the field of battery, and in particular, to a cover plate, a cover plate assembly, a battery housing, a battery module, and a battery pack.

### BACKGROUND

With the rapid development of new energy, battery modules have been widely used. Meanwhile, more lightweight requirement for the battery modules have also been put forward.

In related art, in order to meet the requirement for structural strength of a cover plate of the battery module, the cover plate is generally made of an aluminum plate with a thickness of at least 2 mm.

### SUMMARY

In related art, a cover plate is generally made of an aluminum plate with a thickness of at least 2 mm, resulting in a large weight of the cover plate, which is not conducive to meeting the lightweight requirement for the battery module. When the cover plate has a thickness less than 2 mm, although the weight of the cover plate can be further reduced, the structural strength of the cover plate cannot meet the usage requirements.

In a first aspect, some embodiments of the disclosure provide a cover plate for a cover plate assembly. The cover plate assembly includes an insulating plate and a sealing structure, and the insulating plate is provided with a through hole. The cover plate includes:
a body portion, in which a side of the body portion is configured to connect the insulating plate, and the body portion has a thickness D1, in which 0.8 mm ≤ D1 ≤ 1.5 mm; and
a first boss protruding from a side of the body portion away from the insulating plate, in which the first boss is provided with a liquid injection hole communicating with the through hole;
in which the body portion includes a setting surface facing the insulating plate, and the setting surface is provided with a first concavity corresponding to the first boss; and
the cover plate has a thickness D2 at the first boss, in which 0.8 mm ≤ D2 ≤ 1.5 mm.

In a second aspect, some embodiments of the disclosure provide a cover plate assembly including an insulating plate and a sealing structure. The insulating plate is provided with a through hole. The cover plate assembly further includes the cover plate as described in the first aspect. A side of the body portion provided with the first concavity is connected to the insulating plate, the through hole corresponds to the liquid injection hole, and the sealing structure is configured to seal the liquid injection hole and partially penetrate through the through hole.

In a third aspect, some embodiments of the disclosure provide a battery housing for a battery module. The battery housing includes a housing body and the cover plate assembly as described in the second aspect. A side of the housing body is provided with an opening, the cover plate covers the opening, and the insulating plate is at least partially disposed inside the housing body.

In a fourth aspect, some embodiments of the disclosure provide a battery module, the battery module includes a cell pack and the battery housing as described in the third aspect, and the cell pack is disposed inside the housing body.

In a fifth aspect, some embodiments of the disclosure provide a battery pack, the battery pack includes a box body and a plurality of batteries disposed inside the box body, each of the batteries includes a cell pack and the battery housing as described in the third aspect, and the cell pack is disposed inside the battery housing.

### BENEFICIAL EFFECTS

In the cover plate provided in the disclosure, by setting the first boss protruding from one side of the body portion and providing the first concavity corresponding to the first boss on another side of the body portion, a ring-shaped local thickening structure protruding in a protruding direction of the first boss is formed between outer periphery of the first boss and a sidewall of the first concavity, so that structural strength of the cover plate is greater than that of a flat plate structure with the same thickness. Therefore, the thickness at various positions of the cover plate can be thinned, so that the thicknesses of the body portion and the cover plate at the first boss are less than or equal to 1.5 mm, thereby achieving a more lightweight design of the cover plate. Moreover, since the liquid injection hole is provided on the first boss, it is possible to make the liquid injection hole further away from the insulating plate through the first boss, so as to avoid the situation where the liquid injection hole is closer to the insulating plate due to the thinning design at various locations of the cover plate, thereby avoiding interference between the sealing structure used to seal the liquid injection hole and the cells inside the battery module.

The cover plate assembly provided in the disclosure includes the cover plate as described above. Beneficial effects of the cover plate assembly can refer to the beneficial effects of the cover plate, which will not be repeated here.

The battery housing provided in the disclosure includes the cover plate assembly as described above. Beneficial effects of the battery housing can refer to the beneficial effects of the cover plate assembly, which will not be repeated here.

The battery module provided in the disclosure includes the battery housing as described above. Beneficial effects of the battery module can refer to the beneficial effects of the battery housing, which will not be repeated here.

The battery pack provided in the disclosure includes the battery housing as described above. Beneficial effects of the battery pack can refer to the beneficial effects of the battery housing, which will not be repeated here.

### BRIEF DESCRIPTION OF THE DRAWINGS

FIG. 1 is a schematic three-dimensional structural diagram of a cover plate according to some embodiments of the disclosure.
FIG. 2 is a schematic three-dimensional structural diagram of a cover plate assembly according to some embodiments of the disclosure.
FIG. 3 is a schematic top view of the cover plate assembly according to some embodiments of the disclosure.
FIG. 4 is a schematic exploded structural diagram of the cover plate assembly according to some embodiments of the disclosure.
FIG. 5 is a cross-sectional diagram taken along line A-A in FIG. 3.
FIG. 6 is an enlarged diagram at position M in FIG. 5.
FIG. 7 is a schematic exploded structural diagram of the cover plate assembly according to some embodiments of the disclosure.
FIG. 8 is a schematic three-dimensional structural diagram of a battery module according to some embodiments of the disclosure.
FIG. 9 is a schematic exploded structural diagram of the battery module according to some embodiments of the disclosure.

### Reference characters:

1, Cover plate; 10, body portion; 100, setting surface; 11, first boss; 110, liquid injection hole; 110a, first sub-hole; 110b, second sub-hole; 111, second boss; 12, first concavity; and 120, second concavity.
2, Cover plate assembly; 20, insulating plate; 200, through hole; 21, sealing structure; 210, sealing nail; and 211, sealing cap.
3, Battery housing; 30, housing body; and 300, opening.
4, Battery module; and 40, cell pack.

### DETAILED DESCRIPTION

In the description of the disclosure, unless otherwise specified and limited, the terms "connected", "connection", and "fixed" should be understood in a broad meanings, for example, they can be fixedly connected, detachably connected, or integrated; alternatively, they can be a mechanical connection or an electrical connection; alternatively, they can be directly connected or indirectly connected through an intermediate medium; and alternatively, they can be an internal connection of two components or an interaction relationship between two components. For ordinary person skilled in the art, specific meanings of the above terms in the disclosure can be understood based on specific situations.

In the disclosure, unless otherwise specified and limited, a first feature above or below a second feature may include a direct contact between the first feature and the second feature, or a contact between the first feature and the second feature through another feature between them instead of the direct contact. Moreover, the first feature is disposed "on" or "above" the second feature, indicating that the first feature is directly above and diagonally above the second feature, or simply indicating that the first feature has a higher horizontal height than the second feature. The first feature is disposed "below" and "under" the second feature, indicating that the first feature is directly below and diagonally below the second feature, or simply indicating that the first feature has a lower horizontal height than the second feature.

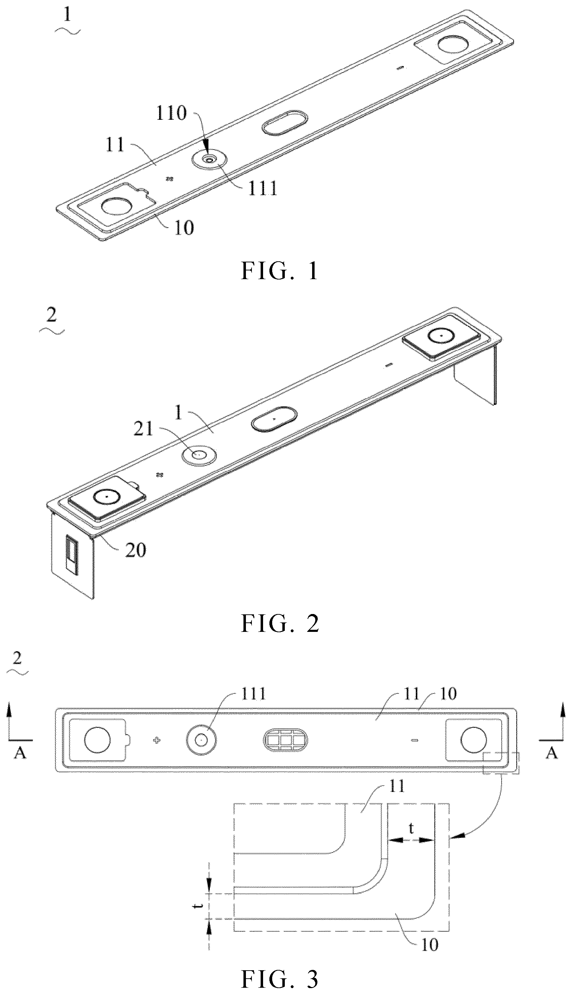

As illustrated in FIGs. 1 to 4, some embodiments of the disclosure provide a cover plate 1 for a cover plate assembly 2. The cover plate assembly 2 includes an insulating plate 20. The insulating plate 20 is provided with a through hole 200.

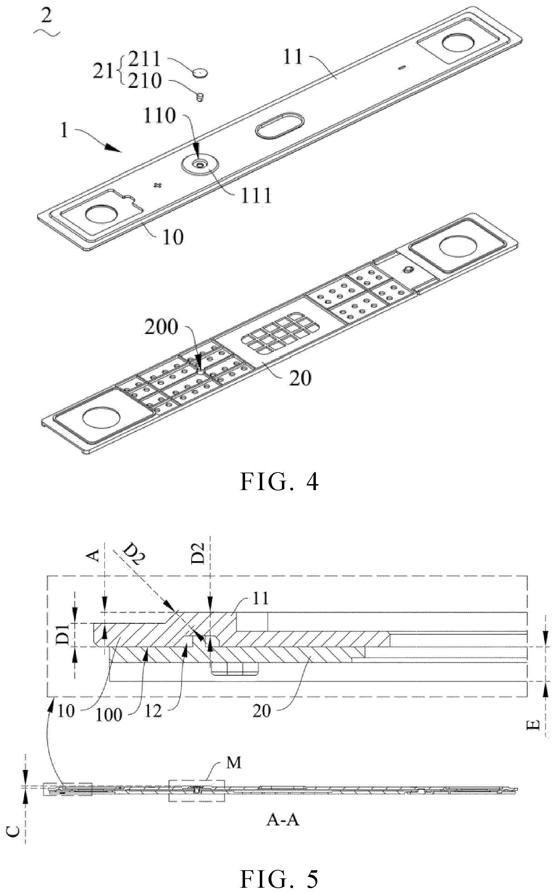

As illustrated in FIG. 4, FIG. 5, and FIG. 6, the cover plate 1 includes a body portion 10 and a first boss 11. One side of the body portion 10 is configured to connect the insulating plate 20. The body portion 10 has a thickness D1, and 0.8 mm ≤ D1 ≤ 1.5 mm. The first boss 11 protrudes from a side of the body portion 10 away from the insulating plate 20. The first boss 11 is provided with a liquid injection hole 110 communicating with the through hole 200. The body portion 10 has a setting surface 100 facing the insulating plate 20. The setting surface 100 is provided with a first concavity 12 corresponding to the first boss 11. The cover plate 1 has a thickness D2 at the first boss 11, and 0.8 mm ≤ D2 ≤ 1.5 mm.

It should be noted that the thickness D2 of the cover plate 1 at the first boss 11 refers to a thickness of a local structure of the cover plate 1 formed by the first boss 11 and the first concavity 12, rather than a distance between the top end of the first boss 11 and the setting surface 100.

By setting the first boss 11 protruding from one side of the body portion 10 and providing the first concavity 12 corresponding to the first boss 11 on another side of the body portion 10, a ring-shaped local thickening structure protruding in a protruding direction of the first boss 11 is formed between outer periphery of the first boss 11 and a sidewall of the first concavity 12, so that structural strength of the cover plate 1 is greater than that of a flat plate structure with the same thickness. Therefore, the thickness at various positions of the cover plate 1 can be thinned, so that the thicknesses of the body portion 10 and the cover plate 1 at the first boss 11 are less than or equal to 1.5 mm, thereby achieving a more lightweight design of the cover plate 1.

Furthermore, since the liquid injection hole 110 is provided on the first boss 11, it is possible to make the liquid injection hole 110 further away from the insulating plate 20 through the first boss 11, so as to avoid the situation where the liquid injection hole 110 is closer to the insulating plate 20 due to the thinning design at various locations of the cover plate 1, thereby avoiding interference between the sealing structure 21 used to seal the liquid injection hole 110 and the cells inside the battery module.

For example, by providing the first boss 11 protruding from one side of the body portion 10, it can be achieved that the body portion 10 of the cover plate 1 has a thickness D1 of 0.8 mm, 0.9 mm, 1 mm, 1.1 mm, 1.2 mm, 1.3 mm, 1.4 mm, or 1.5 mm, and the first boss 11 of the cover plate 1 has a thickness D2 of 0.8 mm, 0.9 mm, 1 mm, 1.1 mm, 1.2 mm, 1.3 mm, 1.4 mm, or 1.5 mm.

In order to enhance the overall structural strength of the cover plate 1 through the first boss 11 and the body portion 10 to meet the design and usage requirements, the first boss 11 needs to protrude from the body portion 10 by a certain height, but not too much. Alternatively, the first boss 11 protruding from the body portion 10 has a protrusion height A satisfying the following relationship: 0.1D1 ≤ A ≤ 2D1. For example, the protrusion height A may be 0.1D1, 0.2D1, 0.5D1, 0.6D1, 0.8D1, 1D1, 1.2D1, 1.5D1, 1.6D1, 1.8D1, 2D1, or the like.

In some embodiments, the first boss 11 and the first concavity 12 are formed on the body portion 10 by stamping and forming, thereby simplifying manufacturing processes of the first boss 11 and the first concavity 12.

In order to further improve the problem of safety hazards caused by the displacement of the sealing structure 21 for the liquid injection hole 110 towards the interior of the battery module due to the overall thinning design of the cover plate 1, which leads to interference between the end of the sealing structure 21 and the cells, alternatively, the cover plate 1 further includes a second boss 111 and a second concavity 120, the second boss 111 protrudes from the first boss 11, the second concavity 120 corresponds to the second boss 111 and is disposed at the bottom of the first concavity 12, and the liquid injection hole 110 is disposed at the second boss 111. In some embodiments, the cover plate 1 has a thickness D3 at the second boss 111, and 0.8 mm ≤ D3 ≤ 1.5 mm. For example, the thickness D3 may be 0.8 mm, 0.9 mm. 1 mm, 1.1 mm, 1.2 mm, 1.3 mm, 1.4 mm, 1.5 mm, or the like, so that the liquid injection hole 110 is located further away from the insulating plate 20, and the mounting space of the sealing structure 21 can further move towards outside of the battery module, so as to further improve the interference between the sealing structure 21 and the cells, and improve the overall usage safety of the battery module.

It should be noted that the thickness D3 of the cover plate 1 at the second boss 111 refers to a thickness of a local structure of the cover plate 1 formed by the second boss 111 and the second concavity 120, rather than a distance between the top end of the second boss 111 and the setting surface 100.

In some embodiments, the second boss 111 and the second concavity 120 can be formed on the first boss 11 and the first concavity 12 by stamping and forming, thereby simplifying manufacturing processes of the second boss 111 and the second concavity 120.

The second boss 111 protruding from the first boss 11 has a protrusion height B. As the protrusion height B increases, the liquid injection hole 110 is farther away from the insulating plate 20, but the second boss 111 has poorer structural stability. As the protrusion height B decreases, the second boss 111 has better structural stability, but the liquid injection hole 110 is closer to the insulating plate 20. Therefore, the protrusion height B cannot be too large or too small. Alternatively, the second boss 111 protruding from the first boss 11 has the protrusion height B satisfying the following relationship: 0.1D2 ≤ B ≤ 2D2. For example, the protrusion height B may be 0.1D2, 0.2D2, 0.5D2, 0.6D2, 0.8D2, 1D2, 1.2D2, 1.5D2. 1.6D2, 1.8D2, 2D2, or the like.

In some embodiments, a surface of the cover plate 1 provided with the liquid injection hole 110 and protruding from the body portion 10 has a height C, that is, the second boss 111 protruding from the body portion 10 has a total protrusion height C, the insulating plate 20 has a thickness E, the sealing structure 21 has a size F in a thickness direction of the cover plate 1, and the thickness D1, the height C, the thickness E, and the size F satisfy the following relationship: -1 mm ≤ D1+C+E-F ≤ 0.1 mm. For example, (D1+C+E-F) may be -1 mm, -0.9 mm, -0.8 mm, -0.7 mm, -0.6 mm, -0.5 mm, -0.4 mm, -0.3 mm, -0.2 mm, -0.1 mm, 0 mm, 0.1 mm, or the like. Units of the thickness D1, the height C, the thickness E, and the size F are all in millimeters, so that an end of the sealing structure 21 away from the liquid injection hole 110 is located in the through hole 200, or an end of the sealing structure 21 away from the liquid injection hole 110 protrudes from the insulating plate 20 and has a height less than or equal to 1 mm, thereby reducing the possibility of interference between the sealing structure 21 and the cells, and achieving a better usage safety of the battery module.

The insulating plate 20 generally adopts a structure with a thickness E of about 0.7 mm. For example, the insulating plate 20 may have the thickness E of 0.5 mm, 0.6 mm, 0.7 mm, 0.8 mm, 0.9 mm, 1 mm, 1.2 mm, or the like. Taking the insulating plate 20 having the thickness E of 0.7 mm as an example, the thickness D1, the height C, and the size F may satisfy the following relationship: -1.7 mm ≤ D1+C-F ≤ -0.6 mm.

It can be understood that the height C is the sum of the protrusion height A of the first boss 11 protruding from the body portion 10 and the protrusion height B of the second boss 111 protruding from the first boss 11, that is, C=A+B.

As illustrated in FIGs. 4 to 7, alternatively, the liquid injection hole 110 includes a first sub-hole 110 and a second sub-hole 10b communicating with each other. The first sub-hole 110 is provided on the second concavity 120. The second sub-hole 10b is provided on the second boss 111. An aperture of the first sub-hole 110 is less than an aperture of the second sub-hole 10b. The sealing structure 21 may include a sealing nail 210 and a sealing cap 211. The sealing nail 210 is sealed and blocked in the first sub-hole 110, a top end of the sealing nail 210 is inserted into the through hole 200, and the sealing cap 211 covers the second sub-hole 10b, thereby achieving secondary sealing of the liquid injection hole 110, and achieving a better sealing effect of the sealing structure 21 on the liquid injection hole 110.

It can be understood that the size F of the sealing structure 21 mentioned above can be an overall size of the sealing cap 211 and the sealing nail 210 in the thickness direction of the cover plate 1.

As illustrated in FIG. 3, the body portion 10 is disposed surrounding the first boss 11, that is, the body portion 10 can be formed as a track shaped structure surrounding the first boss 11, and the body portion 10 has a width t. Since the cover plate 1 is often welded to the housing body of the battery housing by welding, a certain width t is needed to provide sufficient welding areas. Therefore, alternatively, the body portion 10 has the width t satisfying the following relationship: t ≥ 1 mm. For example, the width t can be 1 mm, 1.5 mm, 2 mm, 2.5 mm, 3 mm, 3.5 mm, 4 mm, or the like.

As illustrated in FIG. 2, FIG. 3, and FIG. 4, some embodiments of the disclosure provide the cover plate assembly 2 including the insulating plate 20 and the sealing structure 21. The insulating plate 20 is provided with the through hole 200. The cover plate assembly 2 further includes the cover plate 1 provided in any one of the above-mentioned embodiments. A side of the body portion 10 provided with the first concavity 12 is connected to the insulating plate 20. The through hole 200 corresponds to the liquid injection hole 110. The sealing structure 21 is configured to seal the liquid injection hole 110 and partially penetrate through the through hole 200. By using the cover plate 1 as described above, a more lightweight design of the cover plate assembly 2 can be achieved.

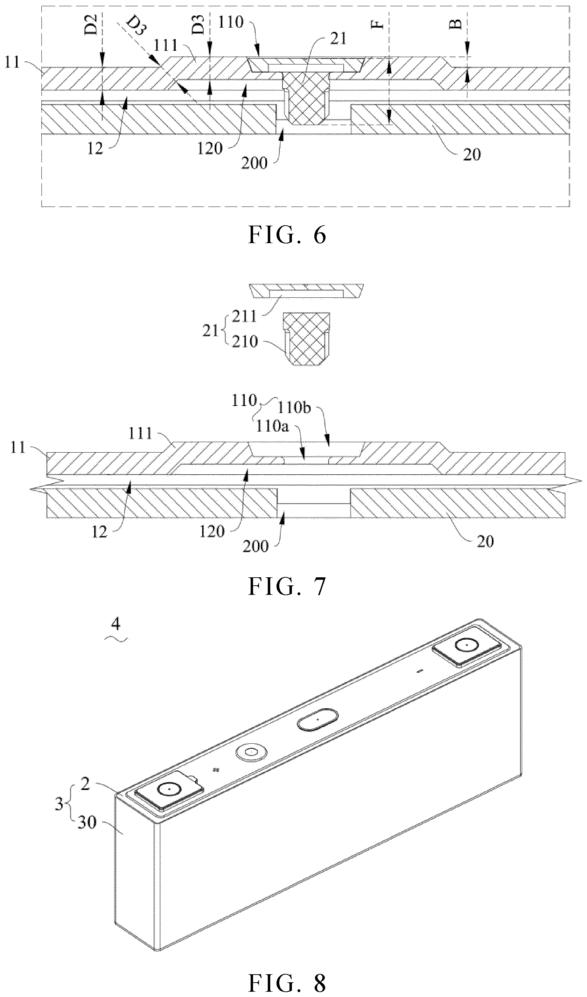

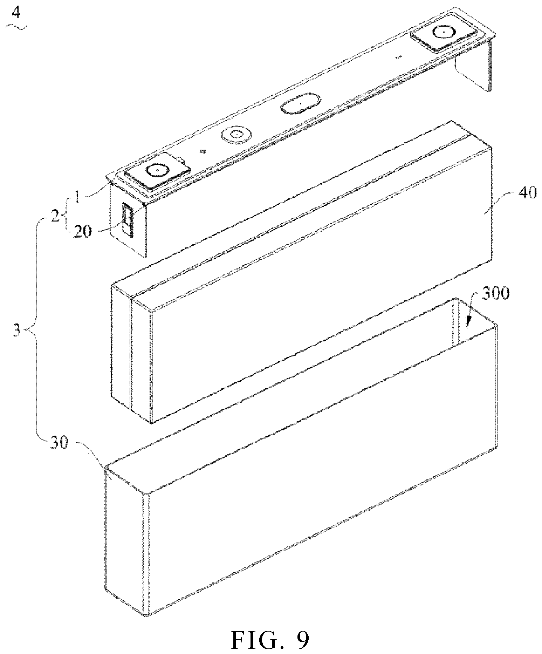

As illustrated in FIG. 8 and FIG. 9, some embodiments of the disclosure provide a battery module 4 including a cell pack 40 and a battery housing 3, and the cell pack 40 is disposed inside the housing body 30 of the battery housing 3.

Specifically, the battery housing 3 includes the housing body 30 and the cover plate assembly 2 provided in any one of the above-mentioned embodiments. A side of the housing body 30 is provided with an opening 300, and the cover plate 1 covers the opening 300. The insulating plate 20 is at least partially disposed inside the housing body 30.

Since the cover assembly 2 provided in any one of the above-mentioned embodiments can achieve a more lightweight design, it is beneficial to meeting the lightweight requirements for the battery housing 3 and the battery module 4 including the battery housing 3.

Alternatively, the housing body 30 can be at least partially made of a plastic material. For example, the housing body 30 can be entirely made of a plastic material, or the housing body 30 can be partially made of a metal material with the remaining part made of a plastic material, so as to reduce the weight of the housing body 30, and achieve the lightweight design of the battery housing 3 and the battery module 4.

Some embodiments of the disclosure provide a battery pack including a box body and a plurality of batteries disposed inside the box body. Each of the batteries includes the cell pack 40 and the battery housing 3, and the cell pack 40 is disposed inside the battery housing 3.

Specifically, the battery housing 3 includes the housing body 30 and the cover plate assembly 2 provided in any one of the above-mentioned embodiments. A side of the housing body 30 is provided with the opening 300, and the cover plate 1 covers the opening 300. The insulating plate 20 is at least partially located inside the housing body 30.

Since the cover assembly 2 provided in any one of the above-mentioned embodiments can achieve a more lightweight design, it is beneficial to meeting the lightweight requirements for the battery housing 3 and the battery pack including the battery housing 3.

In the description of this context, it should be understood that the terms "up", "down", "left", "right", and other directional or positional relationships are based on the directional or positional relationships illustrated in the drawings, only for the convenience of description and simplification of operation, and do not indicate or imply that the devices or components referred to must have a specific orientation, be constructed and operated in a specific orientation, and therefore cannot be understood as a limitation on the disclosure. In addition, the terms "first" and "second" are only used to distinguish in description and do not have any special meaning.

In the description of this specification, the terms "embodiment", "example", and the like, indicates that the specific features, structures, materials, or characteristics described in combination with the embodiment or example are included in at least one embodiment or example of the disclosure. In this specification, the illustrative expressions of the above terms do not necessarily refer to the same embodiment or example.

In addition, it should be understood that although this specification is described according to the embodiments, not every embodiment only contains one independent technical solution. The description of this specification is only for clarity, and those skilled in the art should consider the specification as a whole. The technical solutions in each embodiment can also be appropriately combined to form other embodiments that those skilled in the art can understand.

## Claims

1. A cover plate (1) for a cover plate assembly (2), wherein the cover plate assembly (2) comprises an insulating plate (20) provided with a through hole (200), wherein the cover plate (1) comprises:
a body portion (10), wherein a side of the body portion (10) is configured to connect the insulating plate (20), and the body portion (10) has a thickness D1, wherein 0.8 mm ≤ D1 ≤ 1.5 mm; and
a first boss (11) protruding from a side of the body portion (10) away from the insulating plate (20), wherein the first boss (11) is provided with a liquid injection hole (110) communicating with the through hole (200);
wherein the body portion (10) comprises a setting surface (100) facing the insulating plate (20), and the setting surface (100) is provided with a first concavity (12) corresponding to the first boss (11); and
the cover plate (1) has a thickness D2 at the first boss (11), wherein 0.8 mm ≤ D2 ≤ 1.5 mm.

2. The cover plate (1) of claim 1, wherein the first boss (11) protruding from the body portion (10) has a protrusion height A, wherein 0.1D1 ≤ A ≤ 2D1.

3. The cover plate (1) of claim 1, wherein the cover plate (1) further comprises a second boss (111) and a second concavity (120), wherein the second boss (111) protrudes from the first boss (11), and the second concavity (120) corresponds to the second boss (111) and is disposed at a bottom of the first concavity (12); and the liquid injection hole (110) is disposed at the second boss (111), and the cover plate (1) has a thickness D3 at the second boss (111), wherein 0.8 mm ≤ D3 ≤ 1.5 mm.

4. The cover plate (1) of claim 3, wherein the second boss (111) protruding from the first boss (11) has a protrusion height B, wherein 0.1D2 ≤ B ≤ 2D2.

5. The cover plate (1) of any one of claims 1 to 4, wherein the body portion (10) is disposed surrounding the first boss (11), and the body portion (10) has a width t, wherein t ≥ 1 mm.

6. The cover plate (1) of claim 3, wherein the first boss (11) and the first concavity (12) are formed on the body portion (10) by stamping and forming, the second boss (111) is formed on the first boss (11) by stamping and forming, and the second concavity (120) is formed on the first concavity (12) by stamping and forming.

7. A cover plate assembly (2), wherein the cover plate assembly (2) comprises an insulating plate (20) and a sealing structure (21), the insulating plate (20) is provided with a through hole (200), and the cover plate assembly (2) further comprises the cover plate (1) as claimed in any one of claims 1 to 6, wherein a side of the body portion (10) provided with the first concavity (12) is connected to the insulating plate (20), the through hole (200) corresponds to the liquid injection hole (110), and the sealing structure (21) is configured to seal the liquid injection hole (110) and partially penetrate through the through hole (200).

8. The cover plate assembly (2) of claim 7, wherein a surface of the cover plate (1) provided with the liquid injection hole (110) and protruding from the body portion (10) has a protrusion height C, the insulating plate (20) has a thickness E, and the sealing structure (21) has a size F in a thickness direction of the cover plate (1), wherein -1 mm ≤ D1+C+E-F ≤ 0.1 mm.

9. The cover plate assembly (2) of claim 7, wherein a surface of the cover plate (1) provided with the liquid injection hole (110) protruding from the body portion (10) has a protrusion height C, the first boss (11) of the cover plate (1) protruding from the body portion (10) has a protrusion height A, and the second boss (111) of the cover plate (1) protruding from the first boss (11) has a protrusion height B, wherein C = A + B.

10. The cover plate assembly (2) of claim 8, wherein the insulating plate (20) has the thickness E satisfying the following relationship: 0.5 mm ≤ E ≤ 1.2 mm.

11. A battery housing (3) for a battery module (4), wherein the battery housing (3) comprises:
a housing body (30), wherein a side of the housing body (30) is provided with an opening (300); and
the cover plate assembly (2) as claimed in claim 7, wherein the cover plate (1) covers the opening (300), and the insulating plate (20) is at least partially disposed inside the housing body (30).

12. The battery housing (3) of claim 11, wherein the housing body (30) is at least partially made of a plastic material.

13. A battery module (4) comprising a cell pack (40), wherein the battery module (4) further comprises the battery housing (3) as claimed in claim 11 or claim 12, and the cell pack (40) is disposed inside the housing body (30).

14. A battery pack, wherein the battery pack comprises a box body and a plurality of batteries disposed inside the box body, each of the batteries comprises a cell pack (40) and the battery housing (3) as claimed in claim 11 or claim 12, and the cell pack (40) is disposed inside the battery housing (3).
